## Europäisches Patentamt
## European Patent Office
## Office européen des brevets

(19)

(11) Numéro de publication: **0 016 683**
**B1**

(12) # FASCICULE DE BREVET EUROPEEN

(45) Date de publication du fascicule du brevet:
08.12.82

(51) Int. Cl.³: **B 60 R 1/06**

(21) Numéro de dépôt: 80400308.5

(22) Date de dépôt: 07.03.80

(54) Rétroviseur pour véhicule.

(30) Priorité: 23.03.79 FR 7907429

(43) Date de publication de la demande:
01.10.80 Bulletin 80/20

(45) Mention de la délivrance du brevet:
08.12.82 Bulletin 82/49

(84) Etats contractants désignés:
DE GB IT SE

(73) Titulaire: **Manzoni, Stéphane, 1, rue Pasteur,
F-39200 Saint-Claude (FR)**

(72) Inventeur: **Manzoni, Stéphane, 1, rue Pasteur,
F-39200 Saint-Claude (FR)**

(74) Mandataire: **Moulines, Pierre et al, Cabinet BEAU de
LOMENIE 55, rue d'Amsterdam, F-75008 Paris (FR)**

(56) Documents cités:
DE-A-1 966 669
DE-A-2 426 489
DE-A-2 708 328
FR-A-2 136 229
FR-A-2 225 313
FR-A-2 271 077
FR-A-2 349 474
FR-A-2 356 198
US-A-2 855 825
US-A-3 064 536
US-A-3 370 480

EP 0 016 683 B1

BUNDESDRUCKEREI BERLIN

Rétroviseur pour véhicule

La présente demande a pour objet un rétrovisur pour véhicule.

Les rétroviseurs qui comportent des miroirs mobiles angulairement à l'intérieur de leur boîtier de support et qui sont manoeuvrés pour leur réglage de l'extérieur ou de l'intérieur du véhicule, présentent l'inconvénient que le miroir qui est soumis à des vibrations parasites donne une image floue, »tremblée«, qui nuit à une vision correcte.

Pour éliminer ce défaut, on a imaginé des dispositifs qui ont fait l'objet du brevet FR-A-2 271 077, de la demande de brevet DE-A-2 426 489 et du brevet US-A-2 855 825. Ces dispositifs pour l'élimination des vibrations comportent en général des organes élastiques disposés entre le porte-miroir et le boîtier. Ces organes antivibratoires sont constitués soit par des épingles à contrainte de torsion, soit par des lames travaillant en compression et en friction.

Dans le brevet FR-A-2 271 077, chaque organe antivibratoire est composé d'un élément flexible qui vient en appui coulissant sur la face intérieure de la coupelle et d'un autre élément assujetti à l'arrière de l'organe de support du miroir. L'élément flexible d'appui forme un angle faisant approximativement 90° avec l'autre élément fixe, monté sur la face arrière de l'organe de support du miroir.

Toutefois, ces moyens connus ne permettent pas de supprimer complètement les vibrations si les éléments flexibles (épingles, lames) ne sont pas soumis à une contrainte suffisante.

Pour respecter les règles fixées par les organismen de contrôle, en ce qui concerne l'élimination des vibrations du miroir et qui sont de plus en plus difficiles à satisfaire, on est amené à augmenter le couple de manoeuvre de l'organe de support du miroir en augmentant la contrainte de torsion ou d'appui des éléments flexibles en contact avec le boîtier.

De ce fait, le couple de manoeuvre, notamment pour les rétroviseurs à commande par transmission à câbles, devient trop important, d'où il résulte des difficultés de manoeuvre et un réglage malaisé pouvant entraîner des risques de rupture des câbles au niveau du bouton de commande.

Par ailleurs, les éléments flexibles de type connu forment un angle d'environ 90° avec la face arrière de l'organe de support du miroir, ce qui interdit leur disposition dans des boîtiers de faible profondeur. En venant en butée contre le profil fermé de la paroi arrière du boîtier, les débattements de fin de course de l'organe de support du miroir peuvent, en effet, s'en trouver perturbés.

Dans les dispositifs antivibratoires connus, il faut donc pour que les éléments flexibles soient efficaces, qu'ils soient montés sous une forte contrainte de torsion, et de compression, ce qui engendre par le durcissement de l'organe de manoeuvre, des difficultés de transmission de commande des câbles et des inconvénients. De plus les éléments flexibles présentent un encombrement en profondeur important réduisant les possibilités de débattement angulaire du miroir.

Pour remédier à ces inconvénients, on a recours dans la présente invention à un dispositif perfectionné qui élimine le procédé de contrainte directe dans la liaison entre le boîtier et l'organe de support du miroir.

Conformément à la présente invention, à l'arrière de l'organe de support 3 du miroir est monté au moins un organe élastique 10, 10a, 24 dont les deux extrémités 11, 12, 25, 25a sont en appui contre les faces latérales opposées 1b, 1c du boîtier 1, ledit organe élastique étant engagé dans au moins deux organes de guidage 14, 15, 14a, 15a, 26, 26a solidaires de l'organe de support 3 du miroir et l'axe de l'ensemble du système de guidage 14, 15, 14a, 15a, 26, 26a de l'organe élastique étant situé dans un plan parallèle au plan du miroir 2. Avec cette disposition, l'organe de support du miroir est maintenu légèrement freiné et positionné sans contrainte directe de telle sorte que les vibrations sont supprimées. Par ailleurs ce dispositif permet une douceur de la manoeuvre de réglage du miroir par l'organe de commande et un encombrement réduit en profondeur du dispositif antivibratoire monté sur la face arrière de l'organe de support du miroir. Dans le but d'obtenir un meilleur guidage miroir boîtier, un moyen de liaison entre ces deux organes est obtenu au moyen d'un organe de guidage solidaire du porte miroir dans le prolongement d'un axe ou de deux axes orthogonaux de l'articulation de celui-ci, ledit organe de guidage coulissant dans au moins une nervure située sur la paroi intérieure du boîtier.

D'autres avantages de l'invention seront mieux compris à la lecture de la description qui va suivre de plusieurs exemples de réalisation et en se référant aux dessins annexés, dans lesquels:

La figure 1 est une vue en élévation et en coupe suivant la ligne I-I de la figure 2, d'un mode de réalisation d'un rétroviseur perfectionné suivant l'invention;

La figure 2 est une vue en coupe suivant la ligne II-II dela figure 1;

La figure 3 est une vue en coupe suivant la ligne III-III de la figure 1;

La figure 4 est une vue à grande échelle d'un poussoir monté dans un palier de guidage;

La figure 5 est une vue en coupe suivant la ligne V-V de la figure 4;

La figure 6 est une vue en coupe d'un détail de réalisation de la figure 1 montrant un organe de guidage;

La figure 7 est une vue en coupe suivant la ligne VII-VII de la figure 8 d'un autre mode de réalisation du rétroviseur perfectionné suivant l'invention;

La figure 8 est une vue en coupe suivant la ligne VIII-VIII de la figure 7.

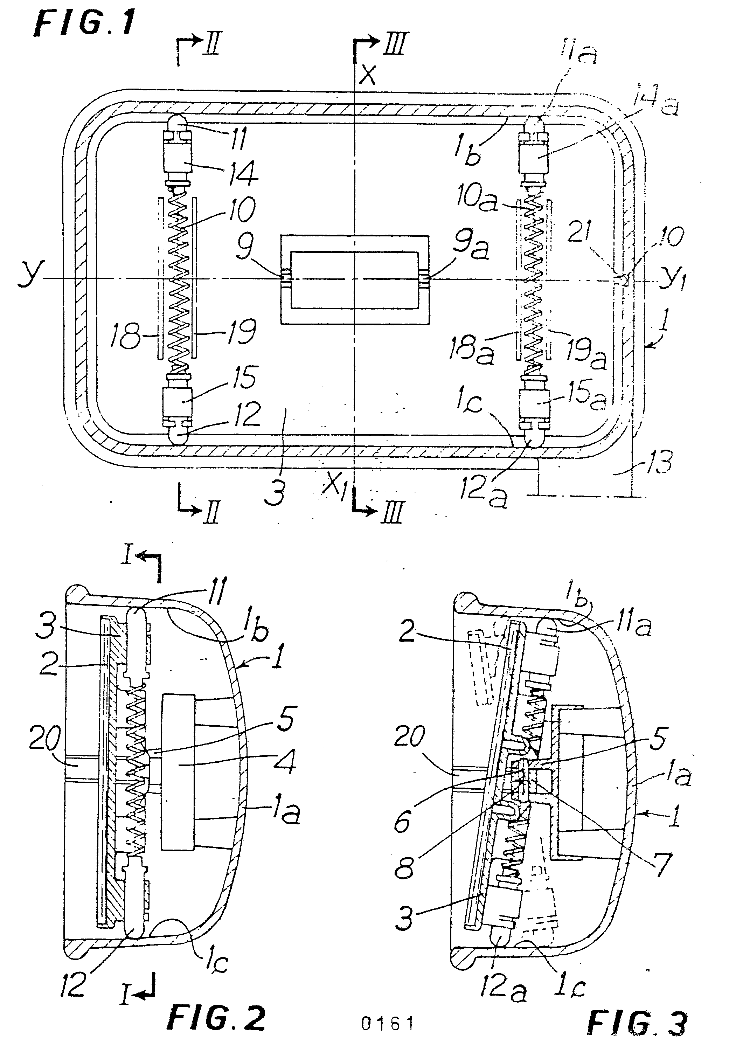

Aux figures 1, 2 et 3, on a représenté un rétroviseur qui comporte un boîtier 1 monté sur un bras 13 relié à la carrosserie du véhicule, ledit boîtier 1 renfermant un miroir 2 fixé sur un organe de support 3 susceptible d'être orienté suivant deux axes perpendiculaires $xx_1$ et $yy_1$ par un moyen de commande non représenté au dessin.

Sur le fond 1a du boîtier 1 est fixé ou venu de moulage un autre organe de support 4 qui présente une chape 5 dans laquelle est fixé un axe 6 vertical sur lequel est montée pivotante une entretoise 7 présentant à ses extrémités des tourillons 8 qui sont montés pivotants dans des paliers 9, 9a solidaires de la face arrière de l'organe de support 3 du miroir. Cette disposition permet un déplacement du fremier organe de support 3 suivant les deux axes perpendiculaires $xx_1$ et $yy_1$. Symétriquement, de part et d'autre de l'axe vertical $xx_1$ sont disposés deux organes élastiques constitués de deux ressorts hélicoïdaux 10, 10a qui sont respectivement en appui à leurs deux extrémités par l'intermédiaire de deux poussoirs 11, 12 et 11a, 12a contre les faces latérales opposées 1b et 1c du boîtier 1.

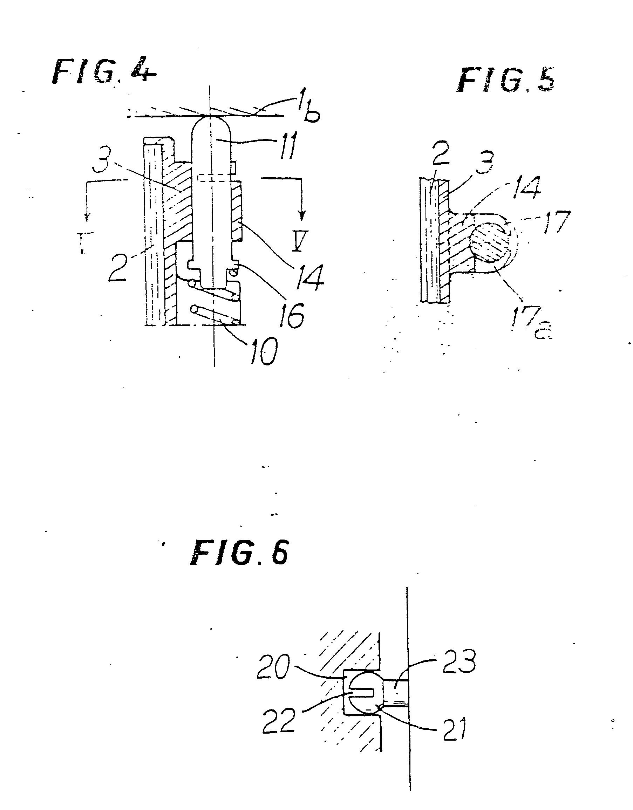

Chaque poussoir 11, 12 et 11a et 12a est monté coulissant librement dans un palier 14, 15, 14a, 15a qui est solidaire de la face arrière de l'organe de support 3 du miroir (figures 4, 5). Le poussoir 11 présente une collerette 16 contre laquelle est en appui l'une des extrémités du ressort 10.

Au-dessus de chaque palier tel que 14, il est prévu deux lèvres 17, 17a en matériau élastique qui sont en contact radialement avec le poussoir 11 pour constituer un organe de pinçage de ce dernier et éliminer tout jeu radial si cela est nécessaire.

De part et d'autre de chaque ressort 10 et 10a sont disposées deux lames 18, 19 et 18a, 19a qui sont solidaires de l'organe de support 3 du miroir et qui assurent le guidage longitudinal des ressorts.

Sur l'un des bords latéraux de boîtier 1, au niveau de son plan médian horizontal, il et prévu une nervure 20 (figures 1, 2, 4 et 6) dans laquelle se déplace en coulissement et en pivotement un téton 21 en forme de sphère présentant une fente 22, ledit téton étant relié par une tige 23 à l'organe de support 3 du miroir. Cette disposition permet d'assurer un maintien renforcé du miroir 2, du fait que le téton est disposé suivant l'axe d'articulation $yy_1$, ceci afin de permettre le débattement angulaire ciel et terre.

Dans le mode de réalisation réprésenté aux figures 1, 2 et 3, l'organe élastique 10, 10a présente une force de poussée faible et pratiquement constante dans tous les débattements autorisés par le mécanisme.

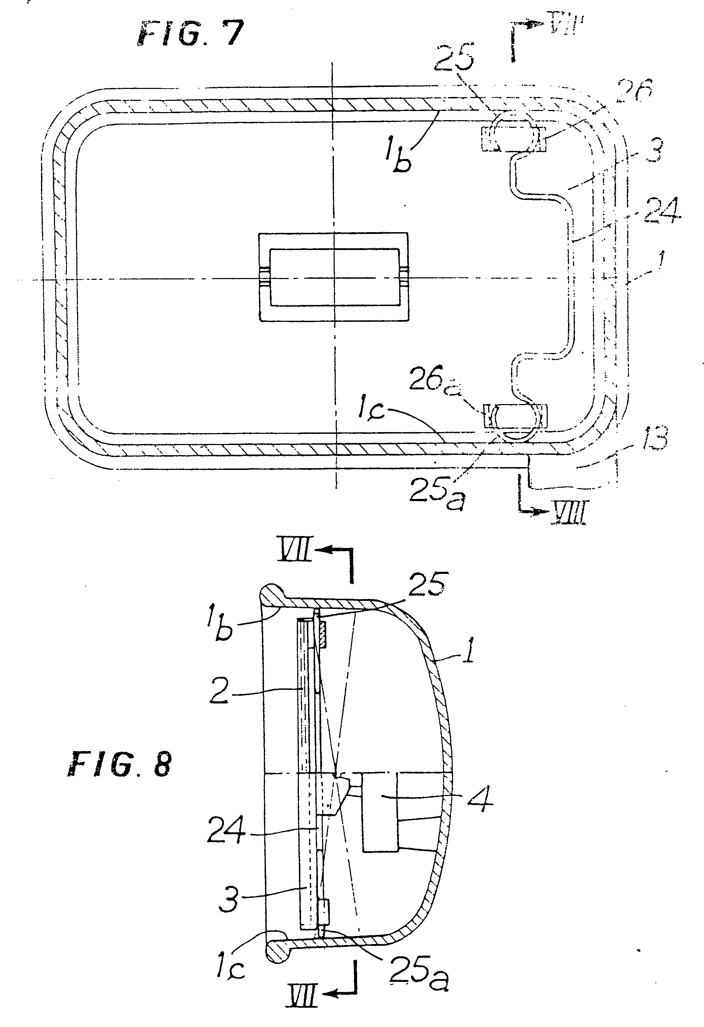

Aux figures 7 et 8, on a représenté une variante de réalisation dans laquelle l'organe élastique est constitué d'un ressort 24 en fil élastique notamment en acier et présentant une partie centrale en forme d'$\Omega$ et deux boucles 25, 25a aux extrémités qui sont en appui sous contrainte contre les faces opposées 1b et 1c du boîtier 1.

Les boucles d'extrémité 25, 25a sont montées librement coulissantes dans des glissières 26, 26a aménagées sur la face arrière et sur les bords opposés de l'organe de support 3 du miroir.

## Revendications

1. Rétroviseur pour véhicule, comportant un miroir (2) fixé sur un organe de support (3) monté de façon articulée dans la partie centrale du fond du boîtier (1), caractérisé en ce que à l'arrière de l'organe de support (3) du miroir est monté au moins un organe élastique (10, 10a, 24) dont les deux extrémités (11, 12, 25, 25a) sont en appui contre les faces latérales opposées (1b, 1c) du boîtier (1), ledit organe élastique étant engagé dans au moins deux organes de guidage (14, 15, 14a, 15a, 26, 26a) solidaires de l'organe de support (3) du miroir et l'axe de l'ensemble du système de guidage (14, 15, 14a, 15a, 26, 26a) de l'organe élastique étant situé dans un plan parallèle au plan du miroir (2).

2. Rétroviseur suivant la revendication 1, caractérisé en ce que sur la face arrière de l'organe de support (3) de miroir sont montés de part et d'autre de l'axe vertical ($xx_1$) du rétroviseur deux ressorts hélicoïdaux (10, 10a) dont les extrémités sont en appui contre deux poussoirs (11, 12, 11a, 12a) qui sont montés coulissants librement dans deux paliers (14, 15, 14a, 15a) fixés sur les bords opposés de l'organe de support (3) du miroir, lesdits poussoirs (11, 12, 11a, 12a) étant en appui sous l'action du ressort (10, 10a) contre les faces intérieures (1b, 1c) opposées du boîtier (1).

3. Rétroviseur suivant la revendication 2, caractérisé en ce que les paliers (14, 15, 14a, 15a) dans lesquels sont montés les poussoirs (11, 12, 11a, 12a) sont munis chacun d'au moins un organe de pinçage constitué de deux lèvres (17, 17a) qui viennent radialement et élastiquement en appui contre le poussoir.

4. Rétroviseur suivant la revendication 2, caractérisé en ce que le ressort hélicoïdal (10, 10a) est disposé entre deux lames (18, 19, 18a, 19a) de guidage longitudinal solidaire de la face arrière de l'organe de support (3) du miroir.

5. Rétroviseur suivant la revendication 1, caractérisé en ce que l'organe élastique est constitué d'un ressort (24) en fil élastique présentant une partie centrale en forme d'$\Omega$ et deux boucles (25, 25a) aux extrémités qui sont en appui contre les faces latérales (1b, 1c) opposées du boîtier, lesdites boucles (25, 25a) étant montées coulissantes librement dans des glissières (26, 26a) aménagées sur les deux bords opposés de la face arrière de l'organe de support (3) du miroir.

6. Rétroviseur suivant l'une quelconque des revendications 1 à 5, caractérisé en ce que le boîtier (1) comporte intérieurement suivant l'axe horizontal une rainure (20) dans laquelle est monté coulissant et pivotant un téton (21) solidaire de l'un des bords de l'organe de support (3) de miroir.

7. Rétroviseur suivant la revendication 6, caractérisé en ce que le téton (21) est consitué par une sphère déformable élastiquement et présentant une fente (22).

**Patentansprüche**

1. Rückspiegel für Fahrzeuge, mit einem Spiegel (2), der an einem im Mittelteil des Bodens des Gehäuses (1) gelenkig gelagerten Tragorgan (3) befestigt ist, dadurch gekennzeichnet, daß an der Rückseite des Tragorgans (3) des Spiegels wenigstens ein elastisches Organ (10, 10a, 24) angeordnet ist, dessen beide Enden (11, 12, 25, 25a) an den gegenüberliegenden Seitenflächen (1b, 1c) des Gehäuses (1) anliegen, daß das elastische Organ in wenigstens zwei mit dem Tragorgan (3) des Spiegels fest verbundene Führungsorgane (14, 15, 14a, 15a, 26, 26a) eingesetzt ist und daß die Achse der Anordnung des Führungssystems (14, 15, 14a, 15a, 26, 26a) des elastischen Organs sich in einer zur Ebene des Spiegels (2) parallelen Ebene befindet.

2. Rückspiegel nach Anspruch 1, dadurch gekennzeichnet, daß auf der Rückseite des Tragorgans (3) des Spiegels beiderseits der senkrechten Achse (xx₁) des Rückspiegels zwei Schraubenfedern (10, 10a) angeordnet sind, deren Enden an zwei Drückern (11, 12, 11a, 12a) anliegen, die in zwei Lagern (14, 15, 14a, 15a) frei verschiebbar angeordnet sind, die an den gegenüberliegenden Rändern des Tragorgans (3) des Spiegels befestigt sind, wobei die Drücker (11, 12, 11a, 12a) unter der Wirkung der Feder (10, 10a) an den gegenüberliegenden Innenflächen (1b, 1c) des Gehäuses (1) anliegen.

3. Rückspiegel nach Anspruch 2, dadurch gekennzeichnet, daß die Lager (14, 15, 14a, 15a), in denen die Drücker (11, 12, 11a, 12a) angeordnet sind, jeweils mit wenigstens einem Klemmorgan versehen sind, das aus zwei Lippen (17, 17a) besteht, die am Drücker radial und elastisch anliegen.

4. Rückspiegel nach Anspruch 1, dadurch gekennzeichnet, daß die Schraubenfeder (10, 10a) zwischen zwei längsgerichteten Führungsblättern (18, 19, 18a, 19a) angeordnet sind, die mit der Rückseite des Tragorgans (3) des Spiegels fest verbunden sind.

5. Rückspiegel nach Anspruch 1, dadurch gekennzeichnet, daß das elastische Organ aus einer Feder (24) aus elastischem Draht besteht mit einem Ω-förmigen Mittelteil und zwei Ringen (25, 25a) an den Enden, die an den gegenüberliegenden Seitenflächen (1b, 1c) des Gehäuses anliegen, wobei die Ringe (25, 25a) in Gleitführungen (26, 26a) frei verschiebbar angeordnet sind, die an den gegenüberliegenden Rändern der Rückseite des Tragorgans des Spiegels ausgebildet sind.

6. Rückspiegel nach einem der Ansprüche 1 bis 5, dadurch gekennzeichnet, daß das Gehäuse (1) innen in Richtung der waagerechten Achse eine Nut (20) aufweist, in der ein Zapfen (21) verschiebbar und schwenkbar angeordnet ist, der mit einem der Ränder des Tragorgans (3) des Spiegels fest verbunden ist.

7. Rückspiegel nach Anspruch 6, dadurch gekennzeichnet, daß der Zapfen (21) aus einer Kugel besteht, die elastisch verformbar ist und einen Schlitz (22) aufweist.

**Claims**

1. Vehicle rearview mirror, comprising a mirror (2) fixed on a supporting member (3) mounted for pivoting in the middle part of the bottom of the casing (1), characterised in that at the back of the supporting member (3) of the mirror is mounted at least a resilient member (10, 10a, 24) the two ends (11, 12, 25, 25a) of which are resting against the opposite lateral faces (1b, 1c) of the casing (1), said resilient member being engaged in at least two guiding members (14, 15, 14a, 15a, 26, 26a) integral with the supporting member (3) of the mirror and the axis of the guide system assembly (14, 15, 14a, 15a, 26, 26a) of the resilient member being situated in a plane parallel to the plane of the mirror (2).

2. Rearview mirror according to claim 1, characterised in that on the rear face of the mirror supporting member (3) are mounted on either side of the vertical axis (xx₁) of the rearview mirror two helical springs (10, 10a) the ends of which are resting against two push members (11, 12, 11a, 12a) which are mounted for sliding freely in two bearings (14, 15, 14a, 15a) fixed on the opposite sides of the supporting member (3) of the mirror, the said push members (11, 12, 11a, 12a) resting under the action of the spring (10, 10a) against the inner opposite faces (1b, 1c) of the casing (1).

3. Rearview mirror according to claim 2, characterised in that the bearings (14, 15, 14a, 15a) in which are mounted the push members (11, 12, 11a, 12a) are each provided with at least one gripping member constituted by two lips (17, 17a) coming radially and resiliently to rest against the push member.

4. Rearview mirror according to claim 2, characterised in thet the helical spring (10, 10a) is situated between two longitudinal guiding strips (18, 19, 18a, 19a) integral with the rear face of the mirror supporting member (3).

5. Rearview mirror according to claim 1, characterised in that the resilient member is constituted by a spring (24) in elastic wire having an omega-shaped middle part with two loops (25, 25a) at the ends which rest against the opposite lateral faces (1b, 1c) of the casing, the said loops (25, 25a) being mounted to slide freely in slide guides (26, 26a) provided on the two opposite edges of the rear face of the mirror supporting member (3).

6. Rearview mirror according to anyone of claims 1 to 5, characterised in that the casing (1) is provided on the inside according to the horizontal axis with a groove (20) in which a lug (21) is pivotally and slidably mounted, said lug being integral with one of the edges of the mirror supporting member (3).

7. Rearview mirror according to claim 6, characterised in that the lug (21) is constituted by a resiliently deformable sphere and is provided with a slot (22).

# FIG.1

# FIG.2

# FIG.3

FIG. 4

FIG. 5

FIG. 6

**FIG. 7**

**FIG. 8**